# EUROPÄISCHE PATENTSCHRIFT

(11) **EP 1 362 965 B1**
(45) Veröffentlichungstag und Bekanntmachung des Hinweises auf die Patenterteilung: **14.06.2006**
(21) Anmeldenummer: 03005553.7
(22) Anmeldetag: 11.03.2003
(51) Int. Cl.: E04C 2/16, E04F 13/04, E04F 13/06, E04B 1/74, E04F 15/10

(54) **Baustoff**
Building material
Matériau de construction

(30) Priorität: 10.05.2002 DE 10220920; 19.09.2002 EP 02021288
(43) Veröffentlichungstag der Anmeldung: 19.11.2003
(73) Patentinhaber: Klemens, Josef, 54317 Lorscheid (DE)
(72) Erfinder: Klemens, Josef, 54317 Lorscheid (DE)
(74) Vertreter: Lang, Christian

(56) Entgegenhaltungen:
- WO-A-01/71123
- DE-A- 4 121 503
- DE-A- 19 507 041
- GB-A- 1 071 747
- HRSG: ITA INSTITUT FÜR TEXTILTECHNIK DER RWTH AACHEN: "Von der Faser zum fertigen Faserverbundbauteil - Kompetenz in Textiltechnik und Textilmaschinenbau" INTERNET ARTICLE, [Online] Februar 2001 (2001-02), XP002239963 Gefunden im Internet: <URL:http://www.ita.rwth-aachen.de> [gefunden am 2003-05-02]

## Beschreibung

Die vorliegende Erfindung betrifft einen Baustoff sowie ein System mit diesem Baustoff zum Dämmen, Isolieren, Sanieren und dergleichen von Bauwerken.

Zur Schonung der Umwelt und der knappen Energieressourcen besteht seit langem ein immer steigender Bedarf zur verbesserten Dämmung und Isolierung von Bauwerken, insbesondere auch von Altbauten. Hierfür gibt es bereits auch eine Vielzahl von Baustoffen, die für bestimmte einzelne Anwendungszwecke mit gutem Erfolg eingesetzt werden können. Allerdings erfordern diese Baustoffe meist bestimmte Hilfsmittel, um sinnvoll in den einzelnen Bereichen eingesetzt werden zu können. Dies führt insgesamt zu einer Vielzahl von Baustoffen und Materialien, die auf einer Baustelle zur Dämmung, Isolierung oder Sanierung eines Bauwerks eingesetzt werden, um ein einziges Bauwerk entsprechend dämmen, isolieren oder sanieren zu können. So werden beispielsweise unterschiedliche Dämm- und Isoliermaterialien für das Dach und für die Wände und für den Boden sowie entsprechende Anbringungsmittel benötigt, siehe dazu de 195 07 041 A1. Dies führt dazu, dass der Aufwand an der Baustelle sehr hoch wird.

Es ist deshalb Aufgabe der vorliegenden Erfindung, einen Baustoff bzw. ein System, das diesen Baustoff verwendet, bereitzustellen, welcher sich durch seine Einfachheit und vielseitigen Verwendbarkeit auszeichnet. Insgesamt sollte der Baustoff leicht herzustellen und zu verarbeiten sein und viele Einsatzgebiete abdecken, um damit bei seiner Anwendung Zeit und Kosten zu sparen und so die Wirtschaftlichkeit zu erhöhen.

Diese Aufgabe wird gelöst durch einen Baustoff bzw. ein System zum Dämmen, Isolieren, Sanieren und dergleichen von Bauwerken mit den Merkmalen der Ansprüche 1 bzw 7 sowie die Verwendung des Baustoffs nach Anspruch 9. Vorteilhafte Ausgestaltungen sind Gegenstand der abhängigen Ansprüche.

Nach Maßgabe der Erfindung weist der erfindungsgemäße Baustoff zum Dämmen, Isolieren, Sanieren und dergleichen von Bauwerken, insbesondere Wohngebäuden, ein ebenes, dünnes, flächiges Gewirk, insbesondere ein Vlies, mit einer feinporösen Struktur auf, welches eine überlagerte grobporige Struktur in Form einer Lochstruktur, und eine gewellte Form zur besseren Verbindung zu anderen Bauteilen aufweist. Unter dem erfindungsgemäßen, ebenen, dünnen, flächigen Gewirk ist ein Stoff zu verstehen, der aus einer Vielzahl von elastischen oder unelastischen Fäden oder Fasern aufgebaut ist, die regelmäßig miteinander verwoben oder in sonstiger Weise unregelmäßig miteinander verbunden sind, so dass eine feinporöse Struktur vorliegt. Insbesondere bei einer unregelmäßigen Verbindung der Fäden oder Fasern kann die Verbindung der Fäden oder Fasern zueinander lediglich über einem Formschluss durch eine gegenseitige Verkrallung oder Verwicklung und/oder über einen Stoffschluss über entsprechende Klebemittel oder durch Verschweißen vorgesehen sein.

Die Fäden oder Fasern können aus Naturmaterialien oder Kunststoffen, beispielsweise Glasfasern, gefertigt sein. Vorzugsweise ist das Gewirk ein Vlies.

Durch die wellige Form, die durch eine entsprechende Pressung des dünnen, ebenen, flächigen Gewirks erzeugt werden kann und/oder die überlagerte grobporöse Struktur wird bei dem erfindungsgemäßen Baustoff erreicht, dass eine gute Haftung, insbesondere über Mörtel- und Klebeschichten an Mauerwerk, Decken oder Böden, erzielt werden kann.

Nach dem erfindungsgemäßen System wird der Baustoff nämlich insbesondere zur Herstellung von hinterlüfteten Fassaden, Entwässerungsvorrichtungen, insbesondere bei Balkonen und dergleichen, für Wand-, Decken- oder Bodenheizungen und -kühlsysteme zur Schall- oder Wärmedämmung von Gebäudeteilen in der Weise eingesetzt, dass der Baustoff zumindest an einer Seite über eine Klebe- oder Mörtelschicht entweder an dem Bauwerksteil, z.B. einem Mauerwerk, und/oder mit einem abschließenden Bauteil, z.B. einer Putzschicht, einem Bodenbelag oder dergleichen, verbunden wird, während im Übrigen eine lose Verlegung möglich ist. Hierbei bietet die grobporöse Struktur und die Wellenform des Gewirks den Vorteil, dass zum einen die Haftung mit der Putz- bzw. Mörtelschicht verbessert wird und dass zum anderen andere Dicht- und Isolierstoffe, die unterhalb oder oberhalb des erfindungsgemäßen Baustoffs oder benachbart zu dem erfindungsgemäßen Baustoff eingesetzt werden können, in günstiger Weise mit diesem verbunden werden können, nämlich durch die Durchdringung mit dem Kleber oder Mörtel und Ausnutzung einer einzigen Klebe- oder Mörtelschicht für mehrere Lagen der Wand-, Boden- oder Deckenausbildung. Darüber hinaus bietet die grobporöse Struktur bzw. die Wellenform des Gewirks die Möglichkeit, Spannungen auszugleichen, ohne dass sie sich auf die darüber angeordneten Bauteile, wie z.B. Putzschichten, Verkleidungen und dergleichen übertragen. Damit kann eine Trennung bzw. Entkopplung benachbarter Bauteile vorgenommen werden, die beispielsweise eine Rissübertragung verhindert.

Die grobporöse Struktur wird durch eine Lochstruktur mit einem regelmäßigen Muster aus Löchern, insbesondere parallelen oder versetzten Reihen von Löchern, gebildet, wobei die Poren bzw. Löcher der grobporösen Struktur einen Flächen- oder Volumenanteil von mindestens 25 %, vorzugsweise 30 % bis 70 %, insbesondere 50 % des Gewirks, ausmachen.

Bei der gewellten Form des Flächengewirks ist die Wellung so ausgeführt, dass die Scheitelpunkte an den jeweiligen Innenseiten benachbarter Wölbungen in einer Ebene oder in einem Bereich von der 0- bis 5-fachen Dicke, vorzugsweise 1- bis 3-fachen, insbesondere 1,5- bis 2-fachen Dicke, des Gewirks liegen.

Bei dem erfindungsgemäßen Baustoff ist ferner eine Krallmatte, bei der ebenfalls Natur- und insbesondere Kunststofffasern unregelmäßig mit einem größeren mittleren Abstand als beim Gewirk miteinender verbunden sind, vorgesehen, wobei das Gewirk und die Krallmatte zumindest mit einer ihrer Hauptflächen miteinander verbunden sind. Vorteilhaft ist es auch, wenn die Krallmatte zwischen zwei Gewirkschichten vorgesehen ist.

Durch die Krallmatte wird in dem Baustoff eine Schicht bereit gestellt, die eine größere Porosität aufweist als die Gewirkschicht bzw. -schichten, jedoch in ihrem mittleren Öffnungsquerschnitt, d.h. mittleren Abstand der miteinander verbundenen Fasern oder Fäden insbesondere kleiner ist, als die Öffnungen bzw. Löcher der grobporösen Struktur des feinen Gewirks. Auf diese Weise ist in der Krallmatte eine offene Porosität gegeben, die zum Durchströmen von Medien, z.B. bei Heiz- und Kühlanlagen, oder zum Abführen von Wasser bei Entwässerungsvorrichtungen genutzt werden kann. Durch die aufeinander abgestimmten Poren bzw. Öffnungsgrößen wird gewährleistet, dass die als pastös anzusehenden Klebe- und Mörtelzusammensetzungen beim Aufbringen zwar teilweise durch die fein- und/oder grobporöse Struktur des Gewirks in die Krallmatte eindringen, aber diese nicht vollständig durchsetzen können, so dass die offene Porosität zum Durchströmen eines Mediums weiterhin gewährleistet bleibt. Diese Eigenschaft des Baustoffs ist auch bei hinterlüfteten Fassaden sowie bei der Schall- und Wärmedämmung vorteilhaft.

Vorzugsweise kann das System entsprechende Dicht- und Isolierprofile umfassen, mit denen der Baustoff an Bauteile angeschlossen werden kann und/oder die zur Überbrückung von Fugen und Stößen dienen. Entsprechend kann der Baustoff auch auf die Dicht- und Isolierprofile angepasste Anschlussbereiche aufweisen.

Ferner ist es möglich, dass der Baustoff insbesondere an den Außenflächen industriell vorgefertigte Bauelemente, wie z.B. OSB-Platten, Pressplatten, Spannplatten und dergleichen aufweist. Darüber hinaus sind viellagige Kombinationen aus Gewirk, Krallmatten und Plattenelementen denkbar.

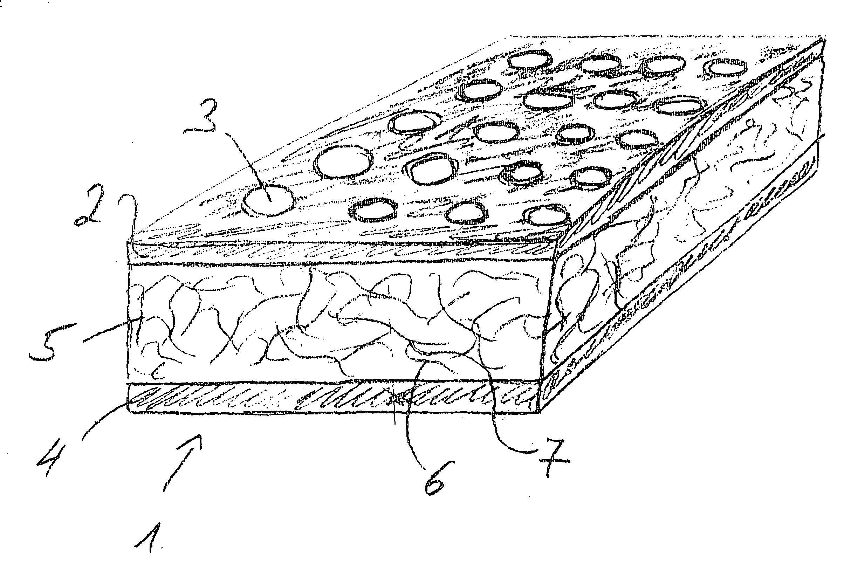

Weitere Vorteile, Kennzeichen und Merkmale der vorliegenden Erfindung werden bei der nachfolgenden detaillierten Beschreibung eines bevorzugten Ausführungsbeispiels anhand der beigefügten Zeichnung deutlich. Die Zeichnung zeigt dabei in rein schematischer Weise eine perspektivische Ansicht eines Ausführungsbeispiels eines erfindungsgemäßen Baustoffs.

Der in der beigefügten Figur dargestellte Baustoff 1 ist als quaderförmige Platte ausgeführt, wobei je nach Wahl der verwendeten Materialien (Naturfasern, Kunststofffasern und dergleichen) die Steifigkeit der Platte je nach Wunsch angepasst werden kann, so dass insbesondere auch völlig flexible Matten, die in jede Form gebracht werden können, bevorzugt sind.

Der Baustoff 1 besteht bei dem gezeigten Ausführungsbeispiel aus drei Schichten, nämlich einem Gewirk bzw. Vlies 2, 4 an der Ober- und Unterseite sowie einer Krallmatte 5, die zwischen den Vliesen 2 und 4 angeordnet ist. Die Vliese 2 und 4 weisen jeweils Löcher 3 auf, die in parallelen Reihen angeordnet sind. Die Größe der Löcher 3 ist sowohl gegenüber der Porosität des Vlieses 2 bzw. 4 als auch der Porosität der Krallmatte 5 deutlich größer, das heißt, der mittlere Abstand, der das Vlies bzw. die Krallmatte bildenden Fasern oder Fäden ist kleiner als der Durchmesser der Löcher 3.

Darüber hinaus ist auch die Porosität des Vlieses 2 bzw. 4 deutlich geringer als die der Matte 5, wie durch die in der Krallmatte 5 schematisch angedeuteten Fasern oder Fäden bzw. die Schraffur der Vliese 2 und 4 angedeutet ist. In der Krallmatte 5 ist auch schematisch angedeutet, dass die Fasern oder Fäden 6 der Krallmatte über Vernetzungspunkte 7 miteinander verbunden sind, wobei sie an den Vernetzungspunkten 7 entweder nur einen Formschluss durch gegenseitige Verwicklung und/oder eine stoffschlüssige Verbindung durch ein Klebemittel oder dergleichen aufweisen.

Eine in der beigefügten Figur dargestellte Baustoffplatte kann nun in unterschiedlichster Weise bei der Dämmung, der Isolierung, Sanierung und dergleichen bei Bauwerken eingesetzt werden.

So kann der Baustoff 1 beispielsweise einfach über eine Mörtelschicht an einer Wand angebracht werden, so dass beispielsweise die Vliesschicht 2 über die Mörtelschicht mit der Wand verbunden ist. Anschließend wird dann über die Vliesschicht 4 eine Putzschicht aufgebracht, so dass über die Porosität der Krallmatte 5 eine hinterlüftete Fassade entsteht, die beispielsweise auch mit heißer Luft umspült werden kann, um so eine Wandheizung zu bilden. Außerdem bietet der Baustoff 1 bei dieser Art der Anwendung den Vorteil, dass möglicherweise Risse, die beispielsweise bei der Altbausanierung in einem Mauerwerk vorhanden sind, und die zu einer relativen Bewegung angrenzender Bauwerksteile führen können, in einfacher Weise überbrückt werden können, da der Baustoff 1 mit der Krallmatte 5 und den Vliesschichten 2, 4 eine Übertragung der Relativbewegung der Bauwerksteile verhindert und somit die auf der Vliesschicht 4 aufgebrachte Putzschicht vor Rissbildung geschützt ist.

Bei einer weiteren Form der Verwendung kann der Baustoff 1 beispielsweise ohne die Vliesschicht 4 auf einem mit einer Feuchtigkeitssperrschicht abgedichteten Bodenbereich abgelegt werden, wobei dann auf der Vliesschicht 2 über eine Mörtelschicht ein Bodenbelag, z.B. Fliesen, aufgebracht werden können. Bei einer derartigen Verwendung kann der Baustoff 1 beispielsweise im Balkonbereich angewandt werden, da dann über die poröse Krallmatte 5 Feuchtigkeit und Nässe, die über den Bodenbelag und die Vliesschicht 2 in den Baustoff 1 eindringen kann, abfließen kann, wenn sie die unter dem Baustoff 1 angebrachte Feuchtigkeitssperrschicht, z. B. eine Folie oder dergleichen, erreicht. Damit kann in einfacher Weise das Problem der Abdichtung von Balkonen und Terrassen oder dergleichen gelöst werden, da durch die Krallmatte 5 eine Schicht bereitgestellt wird, in der einmal eingedrungenes Wasser wieder abgeführt wird, ohne dass es zu stehenden Wasseransammlungen kommt, die letztendlich irgendwann die Feuchtigkeitssperrschicht zerstören und durchdringen könnten.

## Patentansprüche

1. Baustoff zum Dämmen, Isolieren, Sanieren und dergleichen von Bauwerken, insbesondere Wohngebäuden der als quaderförmige Platte ausgeführt ist, umfassend ein ebenes, dünnes, flächiges Gewirk (2, 4), insbesondere ein Vlies, mit einer feinporösen Struktur, wobei der Baustoff weiterhin eine gegenüber dem Gewirk (2, 4) dicke, insbesondere die ein- bis 10-fache Dicke des Gewirks aufweisende Krallmatte (5) umfasst, wobei die krallmatte (5) aus Fasern oder Fäden (6) gebildet ist und zwei gegenüberliegende Hauptflächen hat, wobei die Krallmatte (5) eine Porosität oder einen mittleren Abstand der die Krallmatte (5) bildenden Fasern oder Fäden (6) aufweist, der größer ist als bei der feinporigen Struktur des Gewirks (2, 4) und insbesondere kleiner ist als bei der überlagerten grobporigen Struktur, wobei die Krallmatte (5) und das Gewirk (2, 4) an einer ihrer Hauptflächen miteinander verbunden, insbesondere verklebt oder verschweißt sind, und wobei das Gewirk (2, 4) oder/und die Krallmatte (5) natürliche oder künstliche Fasern oder Fäden umfasst, die systematisch oder zufällig miteinander verwoben oder verknäult sind, und die alleine durch die gegenseitige Verkrallung durch Formschluss miteinander verbunden sind und/oder durch Klebemittel oder dergleichen zueinander fixiert sind, **dadurch gekennzeichnet, dass**
das Gewirk eine überlagerte grobporöse Struktur in Form einer Lochstruktur, und eine gewellte Form zur besseren Verbindung zu anderen Bauteilen aufweist, und wobei die grobporöse Struktur bzw. Lochstruktur aus einem regelmäßigen Muster aus Löchern (3), insbesondere parallelen oder versetzten Reihen von Löchern, besteht, und wobei
durch die gewellte Form in dem flächigen Gewirk Berge und Täler vorliegen, deren Scheitelpunkte an der jeweiligen Innenseite der Rundung in einer Ebene oder beabstandet zueinander mit einem Abstand von dem null- bis fünffache der Dicke des Gewirks, insbesondere dem ein- bis dreifachen, vorzugsweise 1,5-fachen bis 2-fachen, liegen.

2. Baustoff nach Anspruch 1,
**dadurch gekennzeichnet, dass** die Löcher (3) der grobporösen Struktur einen Flächen- oder Volumenanteil von mindestens 25 %, vorzugsweise 30 bis 70 %, insbesondere 50 %, ausmachen.

3. Baustoff nach Anspruch 1 oder 2,
**dadurch gekennzeichnet, dass**
an jeder der beiden gegenüberliegenden Hauptflächen der Krallmatte (5) das Gewirk (2, 4) vorgesehen ist.

4. Baustoff nach einem der vorhergehenden Ansprüche,
**dadurch gekennzeichnet, dass**
der Baustoff an den Seitenrändern Anschlussmittel zum Anschluss an Dicht- und Isolierprofile aufweist.

5. Baustoff nach einem der vorhergehenden Ansprüche,
**dadurch gekennzeichnet, dass**
der Baustoff weiterhin mindestens ein Plattenelement umfasst.

6. Baustoff nach einem der vorhergehenden Ansprüche,
**dadurch gekennzeichnet, dass**
der Baustoff mehrlagig aus Gewirk, Krallmatten und/oder Plattenelementen aufgebaut ist.

7. System zum Dämmen, Isolieren, Sanieren und dergleichen von Bauwerken, umfassend einen Baustoff (1) nach einem der vorhergehenden Ansprüche, mindestens eine Klebe- oder Mörtelschicht und ein abschließendes Bauteil, wobei der Baustoff an eine Wand, dem Boden oder die Decke über eine Klebe- oder Mörtelschicht oder schwimmend anzubringen ist und an seiner gegenüberliegenden seite mit dem abschließenden Bauteil in Form einer Putzschicht, einem Bodenbelag oder dergleichen Verkleidung über die Klebe- oder Mörtelschicht versehen ist, wobei die grobporöse Struktur und die Wellenform des Baustoffs die Haftung mit der Klebe- oder Mörtelschicht verbessert.

8. System nach Anspruch 7,
**dadurch gekennzeichnet, dass**
das System weiterhin Dicht- und Isolierprofile und dergleichen umfasst, die zum Anschluss des Baustoffs an Bauteile und/oder zum Überbrücken von Fugen und Stößen dienen.

9. Verwendung des Baustoffs nach einem der Ansprüche 1 bis 6 zur Herstellung von hinterlüfteten Fassaden, Drainagen oder Entwässerungsanlagen, insbesondere bei Balkonen, Wand-, Decken- oder Bodenheizungen oder -kühlsystemen, zur Schall- oder Wärmedämmung von Gebäudeteilen zum Überbrücken bzw. Entkoppeln von Rissen, unterschiedlichen Materialien und Werkstoffen nebeneinander oder in Schichten übereinander sowie als Armierung und als Haftvermittler und dergleichen.

## Claims

1. A building material for the insulation, sealing, refurbishment and the like of buildings, particularly residential buildings, which is constructed in the form of a rectangular plate, including a flat, thin, laminar fabric (2, 4), particularly a fleece, with a coarse porous structure, the building material further including an interlock mat (5) which is thick by comparison with the fabric and has, in particular, one to 10 times the thickness of the fabric, the interlock mat (5) being constituted by fibres or threads (6), and having two opposite main surfaces, the interlock mat (5) having a porosity or a mean spacing of the fibres or threads (6) constituting the interlock mat (5) which is larger than in the fine pored structure of the fabric (2, 4) and, in particular, is smaller than in the superposed large pored structure, the interlock mat (5) and the fabric (2, 4) being connected together, particularly by adhesive or welding, at their main surfaces and the fabric (2, 4) and/or the interlock mat (5) including natural or artificial fibres which are systematically or randomly interwoven or tangled together and which are connected together only by a form lock by the mutual interlock and/or are fixed in position with respect to one another by adhesive or the like, **characterised in that** the fabric has a superposed coarse porous structure in the form of a hole structure and an undulating shape for better connection to other components and wherein the coarse porous structure or hole structure consists of a regular pattern of holes (3), particularly parallel or offset rows of holes, and wherein, as a result of the undulating shape, peaks and troughs are present in the flat fabric, the crests of which are situated on the respective inner surface of the curvature in a plane or spaced from one another at a distance of zero to five times the thickness of the fabric, particularly one to three times, preferably 1.5 to 2 times.

2. A building material as claimed in Claim 1, **characterised in that** the holes (3) of the coarse porous structure constitute an area or volume proportion of at least 25%, preferably 30 to 70%, particularly 50%.

3. A building material as claimed in Claim 1 or 2, **characterised in that** the fabric (2, 4) is provided on each of the two opposed main surfaces of the interlock mat (5).

4. A building material as claimed in one of the preceding claims, **characterised in that** the building material has connecting means on the side edges for connection to sealing and insulating profiles.

5. A building material as claimed in one of the preceding claims, **characterised in that** the building material further includes at least one plate element.

6. A building material as claimed in one of the preceding claims, **characterised in that** the building material is made up of multiple layers comprising fabric,, interlock mats and/or plate elements.

7. A system for the insulation, sealing, refurbishment and the like of buildings including a building material (1) as claimed in one of the preceding claims, at least one adhesive or mortar layer and a final component, the building material being for application to a wall, the floor or the ceiling by means of an adhesive or mortar layer or floating and is provided on its opposite side with the final component in the form of a plaster layer, a floor covering or similar lining over the adhesive or mortar layer, whereby the coarse porous structure and the undulating shape of the building material improve adhesion to the adhesive or mortar layer.

8. A system as claimed in Claim 7, **characterised in that** the system further includes sealing and insulating profiles and the like which serve to connect the building material to components and/or to bridge gaps and joints.

9. The use of the building material as claimed in one of Claims I to 6 for producing back-ventilated facades, drains or drainage installations, particularly in balconies, wall, ceiling or floor heating systems or cooling systems, for noise or heat insulation of building components for bridging or decoupling cracks, different materials and substances next to one another or in layers above one another and as reinforcement and as adhesion promoter and the like.

## Revendications

1. Matériau de construction pour l'insonorisation, l'isolation, l'assainissement et similaires d'édifices, en particulier d'immeubles d'habitation, qui est réalisé comme plaque parallélépipédique, comprenant un tissu maillé plan, mince, bidimensionnel (2, 4), en particulier un non-tissé, avec une structure poreuse fine, sachant que le matériau de construction comporte en outre un mat à crampons (5), épais par rapport au tissu maillé (2, 4), présentant en particulier une à 10 fois l'épaisseur du tissu maillé, sachant que le mat à crampons (5) est formé de fibres ou de fils (6) et comporte deux faces principales opposées, sachant que le mat à crampons (5) présente une porosité ou une distance moyenne des fibres ou des fils (6) formant le mat à crampons (5) qui sont plus grandes que pour la structure poreuses fine du tissu maillé (2, 4) et qui sont en particulier plus petites que pour la structure poreuse grosse superposée, sachant que le mat à crampons (5) et le tissu maillé (2, 4) sont reliés ensemble sur l'une de leurs surfaces principales, en particulier sont collés ou sont soudés, et sachant quele tissu maillé (2, 4) ou/et le mat à crampons (5) comprend des fibres ou des fils naturels ou synthétiques qui sont tissés ou pelotonnés ensemble de façon systématique ou aléatoire, et qui sont liés ensemble par seul accrochage réciproque par conjugaison de forme et/ou sont fixés les uns aux autres par des colles ou similaires, **caractérisé en ce que**le tissu maillé présente une structure poreuse grosse superposée en forme d'une structure de trous, et une forme ondulée pour un meilleur assemblage à d'autres éléments de construction, et sachant que la structure poreuse grosse, respectivement la structure de trous, consiste en un motif régulier de trous (3), en particulier en des rangées de trous parallèles ou décalées, et sachant quepar la forme ondulée, il y a dans le tissu maillé bidimensionnel des saillies et des creux dont les crêtes à la face intérieure respective des arrondis se trouvent dans un plan ou sont écartées les unes des autres d'une distance de zéro à cinq fois l'épaisseur du tissu maillé, en particulier d'une à trois fois, de préférence de 1,5 à 2 fois.

2. Matériau de construction selon la revendication 1, **caractérisé en ce que** les trous (3) de la structure poreuse grosse constituent une part en surface ou en volume d'au moins 25 %, de préférence de 30 à 70 %, en particulier de 50 %.

3. Matériau de construction selon la revendication 1 ou 2, **caractérisé en ce que** le tissu maillé (2, 4) est prévu sur chacune des deux surfaces principales opposées du mat à crampons (5).

4. Matériau de construction selon l'une des revendications précédentes, **caractérisé en ce que** le matériau de construction comporte à ses bords latéraux des moyens de raccordement pour le raccordement sur des profilés d'étanchéité et d'isolation.

5. Matériau de construction selon l'une des revendications précédentes, **caractérisé en ce que** le matériau de construction comporte en outre au moins un élément en forme de plaque.

6. Matériau de construction selon l'une des revendications précédentes, **caractérisé en ce que** le matériau de construction est construit en plusieurs couches en le tissu maillé, en des mats à crampons et/ou en des éléments en forme de plaque.

7. Système pour l'insonorisation, l'isolation, l'assainissement et similaires d'édifices, comprenant un matériau de construction (1) selon l'une des revendications précédentes, au moins une couche de colle ou de mortier et un élément de construction de terminaison, sachant que le matériau de construction peut être appliqué sur un mur, sur le sol, ou au plafond par une couche de colle ou de mortier ou flottant et est doté à sa face opposée de l'élément de construction de terminaison sous la forme d'une couche de crépis, d'un revêtement de sol ou d'un habillage similaire par l'intermédiaire de la couche de colle ou de mortier, sachant que la structure poreuse grosse et la forme ondulée du matériau de construction améliorent l'adhérence par la couche de colle ou de mortier.

8. Système selon la revendication 7,**caractérisé en ce que**le système comporte en outre des profilés d'étanchéité et d'isolation ou similaires qui servent au raccordement du matériau de construction sur des éléments de construction et/ou à enjamber des joints et des aboutements.

9. Utilisation du matériau de construction selon l'une des revendications 1 à 6 pour la fabrication de façades rétro-aérées, de drainages ou d'installations d'assèchement, en particulier pour des balcons, des systèmes de chauffage ou de réfrigération par les murs, les plafonds ou les sols, pour l'isolation phonique ou thermique de parties de bâtiments, pour enjamber, respectivement découpler des fissures, des substances et des matériaux différents les uns à côté des autres ou en couches les unes au-dessus des autres, ainsi que comme armatures et comme agents d'adhérence et similaires.
